# EUROPÄISCHE PATENTANMELDUNG

(11) **EP 3 772 367 A2**
(43) Veröffentlichungstag der Anmeldung: **10.02.2021**
(21) Anmeldenummer: 20176401.6
(22) Anmeldetag: 26.05.2020
(51) Int. Cl.: B01D 45/12, B01D 45/18, B01D 46/00, B01D 46/24, B01D 50/00, B04C 5/00, B04C 5/04, B04C 5/081, B04C 9/00

(54) **ABSCHEIDER MIT PARTIELLER FILTRIERUNG**

(30) Priorität: 07.08.2019 DE 102019121373
(71) Anmelder: NETZSCH Trockenmahltechnik GmbH, 95100 Selb (DE)
(72) Erfinder: Winter, Frank, 35435 Wettenberg (DE)

(57) **Zusammenfassung**

Abscheider (1) zum Abscheiden von Feststoffpartikeln aus einem mehrfach durch eine Arbeitsmaschine geführten Prozessgasstrom, wobei der Abscheider (1) einen Prozessgaseinlass (9) aufweist, über den von der Arbeitsmaschine abgegebenes, partikelbelastetes Prozessgas in den Abscheider (1) eingespeist wird, und ein filterloses Abscheidungsorgan zur Reduktion der Partikelbelastung des Prozessgases und einen Prozessgasauslass (6) zur Abgabe des reduziert partikelbelasteten Prozessgases an die Arbeitsmaschine, wobei der Abscheider (1) einen Nebenstromfilter (8) besitzt, der einen kleineren Teil des Prozessgases filtert, und einen sich daran anschließenden Nebenauslass (7), der den gefilterten Nebenstrom des Prozessgases ausschleust.

## Beschreibung

### ABSCHEIDER MIT PARTIELLER FILTRIERUNG

Separieren von Partikeln aus einem Prozessgasstrom.

### TECHNISCHER HINTERGRUND

Bestimmte Mühlen oder Brecher (nachfolgend pauschal "Mühlen" genannt) benötigen für ihren Betrieb große Mengen an Prozessgas, das auch Mühlengas genannt wird. In vielen Fällen ist es zum Beispiel so, dass die zunächst großen Partikel durch die entsprechende Führung des Prozessgases intensiv miteinander und/oder mit Prallorganen bzw. Schikanen in der Mühle kollidieren. Dadurch werden die Partikel so häufig zum Zerbrechen gebracht, dass sich schließlich die gewünschte Feinheit einstellt.

Zum Teil werden solche Anlagen im Durchgasbetrieb gefahren, sodass das Träger- bzw. Prozessgas verworfen wird, sobald es die Mühle oder den Brecher verlassen hat. Das Träger- bzw. Prozessgas muss dann komplett von seiner Staubfracht gereinigt werden, so sorgfältig, dass es in die Umgebung entlassen werden kann.

In anderen Fällen, u.a. wenn die Aufrechterhaltung einer inerten Atmosphäre wichtig ist, werden solche Anlagen im Kreisgasbetrieb gefahren. Auch bei solchen Anlagen muss das Träger- bzw. Prozessgas regelmäßig einer Staubabscheidung unterzogen werden.

Die meisten derartigen Mühlen sind typischerweise auf das zusätzliche Einblasen von Spülgas angewiesen. Das Spülgas vermengt sich nach seinem unvermeidbaren Austritt aus dem zu spülenden Bereich mit dem Trägergas und bildet gemeinsam mit ihm das sogenannte Prozessgas und wird zusammen mit ihm abgeführt. Das Spülgas dient typischerweise dazu, in bestimmten Bereichen der Mühle die Partikelbelastung möglichst gering zu halten oder sogar eine Sperrwirkung zu entfalten. So wird beispielsweise bei solchen Maschinen, die sich der Partikeleinwirkung ausgesetzte Gleit- oder Wälzlager bedienen, gegenüber dem Prozessgas unter Überdruck stehendes Spülgas eingeblasen, um den Partikelzutritt zum Lagerspalt bzw. den Wälzkörpern und ihren Laufbahnen zumindest weitgehend zu unterbinden. Darüber hinaus kann Spülgas beispielsweise auch an Zellradschleusen oder zum Sperren von berührungslosen Dichtungen verwendet werden, etwa bei gasgespülten Labyrinthspaltdichtungen oder dergleichen. Schließlich wird Spülgas z. T. auch als Austragshilfe für Schleusen, Trichter oder dergleichen eingesetzt.

Bislang ist es gerade auch bei im Kreisbetrieb arbeitenden Anlagen so, dass das von der Mühle kommende, wegen seiner hohen Partikelbefrachtung zunächst erschöpfte Prozessgas mittels eines Zyklonabscheiders von einem guten Teil seiner Partikelfracht befreit wird. Anschließend wird der bis jetzt noch im Prozessgas verbliebene Anteil an besonders feinen Partikeln durch eine Filtrierrichtung eliminiert bzw. entscheidend reduziert. Dann wird ein Teil des Prozessgases abgeblasen, d. h. an die Umgebung abgegeben. Der Rest des Prozessgases wird rezirkuliert, d. h. der Mühle erneut zugeführt.

### DAS DER ERFINDUNG ZUGRUNDE LIEGENDE PROBLEM

Der Erfindung liegt das Problem zugrunde, dass die Filter regelmäßig gewartet, d. h. entstaubt oder gar gewechselt werden müssen. Dies deshalb, weil die typischen Mühlen mit Prozessgasströmen von mehreren 100 - 10000 m³/h arbeiten und auch am Ende einer sorgfältigen filterlosen Abscheidung im Regelfall immer noch Reststaubgehalte von 1 mg/Kubikmeter bis 20 mg/Kubikmeter vorliegen. Aufgrund dessen werden die betreffenden Filter leicht mit Reststaubfrachten von mehreren Kilogramm pro Stunde konfrontiert. Dementsprechend schnell setzen sich die eingesetzten Filter zu.

Um die Wartungsintervalle so zu strecken, dass sie im Dauerbetrieb tolerable Zeiträume überbrücken, sind entsprechend große Filter im Einsatz.

Angesichts dessen ist es die Aufgabe der Erfindung, eine Möglichkeit anzugeben, mit kleineren Filtern auszukommen oder die Wartungsintervalle der bestehenden Filter deutlich verlängern zu können.

### DIE ERFINDUNGSGEMÄSSE LÖSUNG

Die Lösung der der Erfindung zugrunde liegenden Aufgabe erfolgt mit den Merkmalen des Hauptanspruchs.

Dementsprechend wird ein Abscheider zum Abscheiden von Feststoffpartikeln aus einem mehrfach durch eine Arbeitsmaschine geführten Prozessgasstrom vorgeschlagen, der einen Prozessgaseinlass aufweist, über den von der Arbeitsmaschine abgegebenes, partikelbelastetes Prozessgas in den Abscheider eingespeist wird. Der Abscheider besitzt ferner ein filterloses Abscheidungsorgan zur Reduktion der Partikelbelastung des Prozessgases. Darüber hinaus besitzt der Abscheider einen Prozessgasauslass zur Abgabe des reduziert partikelbelasteten Prozessgases an die Arbeitsmaschine.

Der erfindungsgemäße Abscheider zeichnet sich dadurch aus, dass er einen Nebenstromfilter besitzt, der nur einen kleineren Teil des Prozessgases filtert, und einen sich daran anschließenden Nebenauslass, der den gefilterten Nebenstrom des Prozessgases ausschleust. Der Nebenstrom entspricht im Regelfall (vollständig oder zumindest im Wesentlichen) dem Spülgasstrom.
Unter einem mehrfach durch eine Arbeitsmaschine geführten Prozessgasstrom wird erfindungsgemäß ein Prozessgasstrom verstanden, der, unbeschadet der Tatsache, dass er mehrfach innerhalb der Arbeitsmaschine umlaufen mag, irgendwann vorübergehend aus der Arbeitsmaschine ausgeschleust wird, um behandelt zu werden und danach wieder in die Arbeitsmaschine eingeschleust zu werden. Natürlich ist dabei kein vollständiges Ausschleusen aus der Arbeitsmaschine erforderlich. Vielmehr könnte der erfindungsgemäße Abscheider auch integraler Bestandteil der Arbeitsmaschine sein, sodass der Prozessgasstrom nur aus dem Arbeitsbereich der Arbeitsmaschine aus- und wieder eingeschleust wird. In den meisten Fällen ist der erfindungsgemäße Abscheider ein eigenständiges Gerät, das der Mühle oder dem Brecher zur Seite gestellt und hiermit verrohrt wird.

Die Partikelbelastung des Prozessgases besteht typischerweise aus Partikeln mit einem mittleren Durchmesser zwischen 5 mm und 0,2 µm. Zur Bewältigung solcher Partikelgrößen ist der Abscheider körperlich ausgelegt. Der besagte kleinere Teil des Prozessgases ist ein Teil von zumindest weniger als 10 % des durch den Abscheider durchlaufenden Prozessgases, im Regelfall sogar weniger als 3 % des durch den Abscheider durchlaufenden Prozessgases. Typischerweise entspricht dieser besagte kleinere Teil vollständig oder zunächst im Wesentlichen der Menge des der Arbeitsmaschine zugeführten Spülgases, das sich in der Arbeitsmaschine mit dem Prozessgas vereint.

Ein filterloses Abscheidungsorgan ist ein Abscheidungsorgan, das Partikel anders aus einem Gasstrom entfernt als durch das physische Zurückhalten der Partikel durch den Kontakt derselben mit körperlichen Elementen eines gasdurchlässigen Partikelrückhaltemediums. In Betracht kommt hier zum Beispiel Separieren mittels Zyklonwirkung oder eventuell auch das elektrostatische Separieren.
Die Erfindung nutzt die Erkenntnis, dass die Belastung des Prozessgases mit sehr feinen Partikeln keine Rolle spielt, solange das Prozessgas in die Arbeitsmaschine zurückgeführt wird. Hierauf aufbauend schlägt die Erfindung vor, wirklich nur jenen Teil des Prozessgases durch Filtrieren auch von sehr feinen Partikeln zu befreien, der dem Kreislauf entzogen wird und zu diesem Zweck in irgendeiner Form nach außen abgegeben werden muss.

Auf diese Art und Weise gelingt es, ohne übermäßigen Aufwand einen Filter vorzusehen, der in Relation zu der Menge des durch ihn hindurchgeschleusten Nebenstroms eine ausgesprochen große Filteroberfläche hat, wie sie sich bei den bekannten Lösungen im Regelfall nicht realisieren lässt. Hierdurch werden die Wartungsintervalle für den Filter signifikant verlängert, da sich der nur geringer als bisher belastete Filter erst wesentlich später zusetzt. Ein weiterer Vorteil ist, dass auch wesentlich kleinere Filter benötigt werden, da die zu filternde Gasmenge deutlich verringert wird.

### OPTIONALE MÖGLICHKEITEN FÜR EINE BEVORZUGTE WEITERENTWICKLUNG DER ERFINDUNG

Im Regelfall ist es so, dass dem Nebenstromfilter ein filterloses Abscheidungsorgan vorgeschaltet ist. Die Freischaltung erfolgt derart, dass der Nebenstromfilter ausschließlich oder jedenfalls im Wesentlichen nur mit reduziert partikelbelastetem Prozessgas gespeist wird - verglichen mit der Partikelbelastung, die das Prozessgas bei seinem Eintritt in den Abscheider aufweist.

Idealerweise umfasst das Abscheidungsorgan einen Zyklonabscheider. Das kann in einfachen Fällen auch bedeuten, dass das Abscheidungsorgan nur aus einem Zyklonabscheider oder gegebenenfalls mehreren hintereinander geschalteten Zyklonabscheidern besteht. Zyklonabscheider sind wartungsfrei und vermögen hohe Partikelfrachten vom Prozessgasstrom zu separieren.

Besonders günstig ist es, wenn das Abscheidungsorgan eine sich stromabwärts an den Zyklonabscheider anschließende Umlenkschikane umfasst, die eine zweite Abscheidungsstufe verwirklicht. Als Umlenkschikane wird nicht nur, aber jedenfalls jede Stromlenkeinrichtung verstanden, die zumindest den überwiegenden Teil der zuvor in dem Zyklonabscheider kreisenden Strömung dazu zwingt, ihre bisherige Bahn zu verlassen und ihre Strömungsrichtung gegenüber der bisherigen Strömungsrichtung um mindestens 120 - 360° zu ändern und zwar im Regelfall auf einem Bahn-Durchmesser, der kleiner ist als der kleinste Durchmesser des Zyklons

Idealerweise ist als Umlenkschikane ein Rohr mit einer stirnseitigen und dadurch der Zyklonströmung abgewandten Eintrittsöffnung vorgesehen. Das an seinem einen Ende als Umlenkschikane dienende Tauchrohr ist im Wesentlichen zentrisch bzw. koaxial im Auge oder im Bereich des Auges der Zyklonströmung positioniert. Das erlaubt eine besonders kompakte Bauweise. Die Zyklonströmung kann um das Tauchrohr kreisen und nutzt den ansonsten nicht nutzbaren Bereich des Auges des Zyklons, indem es diesen Bereich vom Rest des Zyklons trennt. Durch diese Trennung können im Auge des Zyklons ungestört andere Funktionsorgane untergebracht werden, wie etwa der für den Nebenstrom zuständige Filter.

Im Regelfall durchdringt das Tauchrohr die Zyklonströmung vollständig - indem der Prozessgaseinlass, ab dem die Zyklonströmug beginnt, unterhalb des oberen Endes des Tauchrohrs angeordnet ist und indem das Tauchrohr so gestaltet ist, dass die Zyklonströmung am unterseitigen Eintritt in das Tauchrohr im Wesentlichen ihr Ende findet.
Bevorzugt wird eine konstruktive Gestaltung gewählt, die dahin geht, dass das Tauchrohr mit einer Eintrittsöffnung an seiner unteren Stirnseite versehen ist. Dabei ist das Tauchrohr im Regelfall derart ausgebildet, dass es in seinem Inneren eine entlang seiner Längsachse aufsteigende Strömung führt. Der Abscheider wiederum ist so ausgebildet, dass die Zyklonströmung eine fallende Strömung zwischen dem Prozessgaseinlass und der unteren Stirnseite des Steigrohrs ausbildet. Durch die erst entlang der Außenmantelfläche des Tauchrohrs fallende Strömung und das anschließende (schroffe) Abbiegen der Strömung in das Innere des Tauchrohrs hinein als dort wieder aufsteigende Strömung wird die Abscheidung der Partikel wesentlich verbessert. Denn das besagte "Abbiegen" überfordert einen guten Teil der bisher noch in der Strömung verbliebenen Partikel. Sie setzen die ihnen zuvor aufgezwungene Bewegung trägheitsbedingt noch einen Moment länger fort als der Gasstrom. Sie werden dadurch aus diesem ausgetragen, werden sozusagen "aus der Kurve getragen". Der Bereich, in dem die auf der Außenseite des Tauchrohrs fallende Zyklonströmung in das Tauchrohr hinein abbiegt und dort wieder aufzusteigen beginnt, bildet somit eine zweite Abscheidungsstufe, die sich an die erste Abscheidungsstufe in Gestalt des Zyklons anschließt.

### EINE WEITERE ERFINDUNGSGEMÄSSE LÖSUNG

Eine weitere erfindungsgemäße Lösung, für die sowohl in Alleinstellung Schutz beansprucht wird als auch in Verbindung mit den bereits aufgestellten Ansprüchen, sieht wie folgt aus:
Der Abscheider ist jedenfalls nach dem Oberbegriff des ersten Hauptanspruchs gestaltet. Er besitzt ein Tauchrohr. Das Tauchrohr zeichnet sich dadurch aus, dass es dort, wo es die Umlenkschikane bildet, mehrteilig ausgebildet ist. Die besagte Ausbildung ist derart gewählt, dass seine Eintrittsöffnung von einem vom Rest des Rohres abnehmbaren Tauchrohrendstück gebildet wird. Dieses lässt sich gegen mindestens ein anderes, vorzugsweise einen weiteren Bestandteil des Abscheiders bildendendes Tauchrohrendstück austauschen. Dieses andere Tauchrohrendstück bildet eine Eintrittsöffnung mit einem anderen Durchmesser aus. Idealerweise lässt sich das Tauchrohrendstück, das dann mit einem Bajonettverschluss, sonstigen Schnellverschluss und/oder Rändel- oder Flügelmuttern befestigt ist, werkzeuglos an und abbauen.

### WEITERE OPTIONALE MÖGLICHKEITEN FÜR EINE BEVORZUGTE WEITERENTWICKLUNG DER ERFINDUNG

Idealerweise ist es so, dass sich das Tauchrohr verzweigt in einen ersten Zweig, der einen Prozessgasauslass bildet, und in einen zweiten Zweig, der einen Nebenauslass bildet. Dabei liegt das Ende des ersten Zweiges vorzugsweise unterhalb des Endes des zweiten Zweiges. Diese Art der Strömungsführung verbessert die Möglichkeiten, die Größe des Volumenstroms zu steuern, der als Nebenstrom in den zweiten Zweig eintritt.

Vorzugsweise ist es so, dass das Tauchrohr in seinem zweiten Zweig einen dem Nebenauslass vorgeschalteten Filter beherbergt. Dabei ist der Filter vorzugsweise als Filterrohr mit einer idealerweise vertikal verlaufenden Rohrlängsachse ausgebildet. Seine Mantelfläche bildet das eigentliche Filtermaterial. Sie wird von außen nach innen von dem Nebenstrom durchströmt. Dabei wird der Nebenstrom vorzugsweise über einen Spalt zwischen dem Tauchrohr und dem Filterrohr an den Filter herangeführt. Auf diese Art und Weise lässt sich besonders raumsparend ein Filter erreichen, der in Relation zur absoluten Größe des Nebenstroms eine beträchtliche Filterfläche aufweist. Zudem erleichtert diese Art der Anordnung die Reinigung des Filters durch Blasen bzw. Druckstöße entgegen der Filterrichtung.

Idealerweise ist der Abscheider - vorzugsweise hinter dem Nebenauslass und integriert in das Abscheidergehäuse oder jedenfalls verrohrt mit dem Abscheider - mit einer ihm zugeordneten Saugpumpe ausgerüstet. Die Saugpumpe beaufschlagt den Nebenauslass bzw. den zweiten Zweig mit Unterdruck. Auf diese Art und Weise lässt sich die Größe des Nebenstroms auf das benötigte Maß einstellen.

Besonders günstig ist es, wenn der Abscheider eine Spülvorrichtung aufweist. Diese kann so gestaltet sein, dass der Filter entgegen seiner Filtrierrichtung gespült werden kann, vorzugsweise mittels Druckstößen.

Besonders kompakt baut die Anlage, wenn das Tauchrohr den Filter für den Nebenauslass vollständig beherbergt.

Der dem Nebenauslass vorgeschaltete Filter lässt sich besonders gut entstauben, wenn er so angeordnet ist, dass von ihm beim Spülen abgehobene Partikel durch das Tauchrohr hindurch nach unten in den Partikelaustragsbereich abtransportiert werden bzw. ausfallen können, ohne dass weitere besondere Lenkungsmaßnahmen nötig sind.

Die Steiggeschwindigkeiten in dem Rohr um den Filter sollten idealerweise zwischen 0,2 - 1,5 m/sec liegen und vorzugsweise < 1m/sec sein, um ein Herunterfallen des abgeschieden Staubes zu ermöglichen.

Besonders effektiv gestaltet sich die Separation, wenn sich das Zyklonmantelrohr oberhalb der Schikane erweitert und auf der Höhe der Schikane wieder verengt.

### EINE WEITERE ERFINDUNGSGEMÄSSE LÖSUNG

Erfindungsgemäß wird zusätzlich auch ein Verfahren zum Abscheiden von Feststoffpartikeln aus einem eine Arbeitsmaschine verlassenden und später dieser im Wesentlichen wieder zuzuführenden Prozessgasstrom vorgeschlagen, der aus einem Trägergasstrom zum Transport des zu bearbeitenden Gutes besteht, der mit einem Spülgasstrom zum Ausspülen von Partikeln aus Lagern oder anderen sensiblen Bereichen vereinigt ist. Das erfindungsgemäße Verfahren zeichnet sich dadurch aus, dass der Prozessgasstrom zuerst einer filterlosen - vorzugsweise unterschiedlich-mehrstufigen - Partikelabscheidung unterworfen wird, etwa zuerst einer Abscheidung durch Zyklonwirkung und dann einer Abscheidung durch Umlenkschikane. Dann wird der Prozessgasstrom aufgeteilt in einen ersten Teil, der der Arbeitsmaschine unfiltriert wieder zugeführt wird, und einen zweiten Teil, der filtriert und dann verworfen wird. Dabei entspricht der zweite Teil des Prozessgasstroms - völlig oder zumindest im Wesentlichen - dem Spülgasstrom, der der Arbeitsmaschine aktuell neu zugeführt wird.

Der entscheidende Vorteil dieser Vorgehensweise ist der, dass nur der kleine Teil des Prozessgases filtriert wird, der auch wirklich einer Filtrierung bedarf. Der größere Teil des Prozessgases wird ungefiltert in die Mühle rezykliert, in der Erkenntnis, dass es für seine Aufgabenerfüllung in der Mühle auf seine Restbelastung mit feinen Partikeln nicht ankommt. Daher sind nur wesentlich kleinere Filteranlagen erforderlich.

Weitere Wirkungsweisen, Ausgestaltungsmöglichkeiten und Vorteile der Erfindung ergeben sich für den Fachmann aus der nachfolgenden Beschreibung eines bevorzugten Ausführungsbeispiels anhand der Figuren.

### FIGURENLISTE

Die Fig. 1 zeigt ein Ausführungsbeispiel des erfindungsgemäßen Abscheiders im Mittellängsschnitt.
Die Fig. 2 zeigt die Gesamtanlage, in die der erfindungsgemäße Abscheider eingebaut ist.
Die Fig. 3 zeigt eine Ansicht gemäß Fig. 1, in der durch entsprechende Pfeile die Strömungsverhältnisse symbolisiert sind.
Die Fig. 4 zeigt ein alternatives, zum Abscheider gehöriges Tauchrohrendstück 11 in vom Abscheider demontierten Zustand.

### BEVORZUGTES AUSFÜHRUNGSBEISPIEL

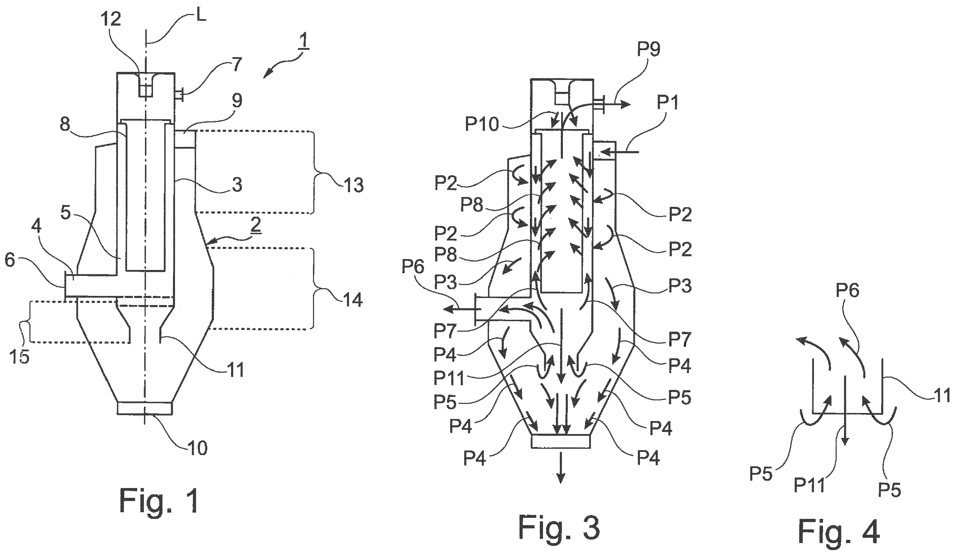

Die Figur 1 zeigt das bevorzugte Ausführungsbeispiel des Abscheiders 1.

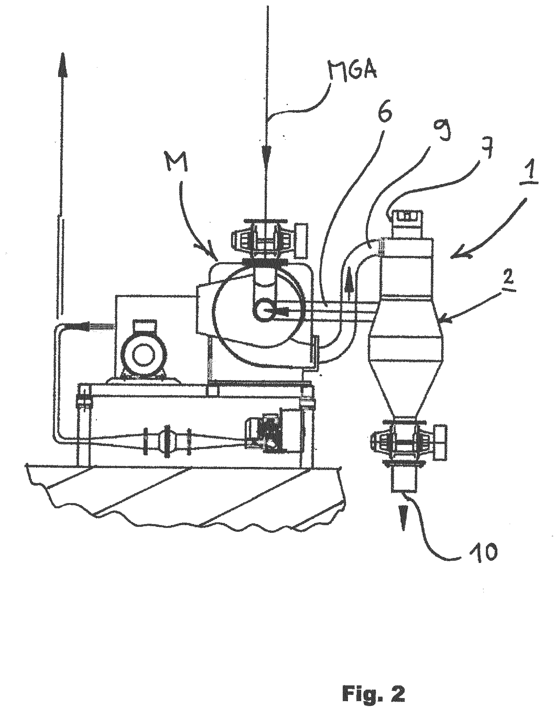

Der Abscheider 1 ist hier als der Arbeitsmaschine beiseite gestellte Anlage realisiert, also als ein Gerät, das quasi frei oder zumindest weitestgehend unabhängig neben der von ihm zu bedienenden Arbeitsmaschine - hierin Gestalt einer Mühle M mit einer Mahlgutaufgabe MAG - steht und mit dieser verrohrt ist, vgl. auch Figur 2, die diesen Einsatzfall illustriert.

Der Abscheider 1 besteht aus einem im Regelfall den Abschluss nach außen bildenden Gehäuse 2. Das Gehäuse 2 bildet mit einem überwiegenden Teil seiner Mantelfläche integral ein Zyklonmantelrohr, das gleich noch näher erläutert wird.

An der Oberseite des Gehäuses 2 ist der Prozessgaseinlass 9 angeordnet. Über den Prozessgaseinlass 9 wird dem Abscheider aus der Arbeitsmaschine ausgeleitetes Prozessgas zugeführt, das mit Partikeln befrachtet ist, die im nächsten Schritt zumindest im Wesentlichen aus ihm entfernt werden müssen.

An seiner Unterseite ist das Gehäuse 2 mit einem Produktaustrag 10 zum Abführen der aus dem Prozessgas ausgetragenen Partikel versehen. Am Produktaustrag 10 ist ein Gasabschlussorgan vorgesehen. Vorzugsweise können hier Taktschleusen, Klappen, Zellradschleusen oder ein fest angedocktes Fass zum Einsatz kommen. Idealerweise ist der Produktaustrag 10 zugleich als Revisionsöffnung ausgestaltet, über die der Anlageneinrichter das gleich noch näher zu beschreibende Tauchrohrendstück 11 des Tauchrohres 3 gegen ein anderes solches Tauchrohrendstück austauschen kann. Zu diesem Zweck ist der lichte Durchmesser des Produktaustrags 10 vorzugsweise so dimensioniert, dass durch ihn das Tauchrohrendstück 11 gelöst, entnommen und ein neues Tauchrohrendstück 11 zugeführt, positioniert und am Tauchrohr 3 befestigt werden kann.

Über das Gehäuse 2 kann an dessen oberer Seite das Tauchrohr 3 hinausragen, so, wie das die Fig. 1 zeigt.

Zumindest der überwiegende Teil des Tauchrohrs 3 befindet sich allerdings bevorzugt innerhalb des Gehäuses 2. Das Tauchrohr ist bevorzugt so angeordnet, dass seine Rohrlängsachse L vertikal verläuft.

Wie man gut anhand der Fig. 1 bzw. 3 sehen kann, sind das Gehäuse 2 und das Tauchrohr 3 so gestaltet und ineinander verbaut, dass der Ringraum zwischen dem Gehäuse und dem Tauchrohr direkt hinter dem vorzugsweise tangentialen Prozessgaseinlass einen Zyklonbereich bildet, der auch als erste Separationszone 13 bezeichnet werden kann. Die Gestaltung ist so gewählt, dass hier eine Vorreinigung stattfindet, deren Wirkungsgrad je nach Produkt, Korngröße, Dichte und Temperatur mehr als 90 % beträgt.

Strömungsmäßig daran anschließend erweitert sich der Ringraum zwischen dem Gehäuse 2 und dem Tauchrohr 3. Er bildet dadurch eine sich an den Zyklonbereich bzw. die erste Separationszone 13 anschließende Beruhigungszone 14. Die Beruhigungszone ist so ausgelegt, dass sie die Geschwindigkeit soweit herabsetzt, dass die im Zyklonbereich nach außen abgesonderten Partikel auf direktem Wege nach unten in den Produktaustrag ausfallen können.

Wie man ebenfalls gut anhand der Fig. 1 erkennen kann, besitzt das Tauchrohr 3 - bevorzugt an seiner unteren Stirnseite - eine nach unten offene Stirneintrittsöffnung, die als Prozessgaseintritt in das Tauchrohr fungiert.

Um aus der Beruhigungszone in den Prozessgaseintritt einzutreten und dann im Tauchrohr aufzusteigen, muss die Strömung "scharf" in das Innere des Tauchrohrs hinein "abbiegen", im Regelfall um mehr als 150°, idealerweise um annähernd 180°.

Auch insoweit wirkt sich die Beruhigungszone synergistisch aus, denn die mit ihr einhergehende Geschwindigkeitsabsenkung ermöglich dem Prozessgasstrom ein besonders scharfes Abbiegen über die offene Stirnseite des Tauchrohres in dieses hinein.

Das besagte "Abbiegen" erfolgt auf einer Bahn, deren Krümmungsradius deutlich kleiner ist als der Krümmungsradius der Bahnen im Zyklon. Das "Abbiegen" überfordert einen guten Teil der bisher noch in der Strömung verbliebenen, kleineren Partikel. Sie setzen die ihnen zuvor aufgezwungene Bewegung trägheitsbedingt noch einen Moment länger fort als der Gasstrom und fallen daher nun ebenfalls in den Produktaustrag 10 aus.

In dem Bereich, in dem die Strömung in das Innere des Tauchrohrs abbiegt, bildet sich also eine zweite Separationszone 15 aus, die sich in ihrem Separationsprinzip bzw. ihrer Umlenkgeometrie von dem der ersten Separationszone 14 unterscheidet und daher andere Partikelgrößen zur Abscheidung bringt, nämlich solche, die dem Zyklon entgangen sind. Zwar werden in dieser zweiten Separationszone absolutmengenmäßig nur deutlich weniger Partikel abgeschieden als in der ersten Separationszone; dennoch leistet die zweite Separationszone einen ausgesprochen positiven Beitrag, da hier wesentlich feinere Partikel als zuvor im ersten Separationsbereich abgeschieden werden - also Partikel, die andernfalls einen Partikelfilter besonders schnell zusetzen würden. Bei entsprechender Gestaltung der zweiten Separationszone können hier zwischen 75 % und 90 % derjenigen Partikel abgeschieden werden, die das Prozessgas nach seinem Verlassen des ersten Separationsbereichs noch mit sich führt. Das verringert die Belastung des nachgeschalteten Filters spürbar.

Wie zuvor schon erwähnt, ist es vorzugsweise so, dass das Tauchrohr dort, wo es die zweite Separationszone bildet, zwei- bzw. mehrteilig ausgeführt ist und ein abnehmbares Tauchrohrendstück 11 trägt. Im Regelfall gehören zu dem Abscheider verschiedene Tauchrohrendstücke, die Stirneintrittsöffnungen mit unterschiedlichen lichten Durchmessern ausbilden und/oder unterschiedliche Längen in Richtung der Tauchrohrlängsachse L aufweisen und dadurch das Abscheidungsverhalten beeinflussen. Gesagt sei an dieser Stelle, dass über die jeweilige Länge des Tauchrohrendstücks die genaue Lage der zweiten Separationszone und ihr Abstand zur ersten Separationszone so festlegt werden kann, dass die zweite Separationszone in Abhängigkeit von den konkreten Gegebenheiten eine möglichst effektive Wirkung entfalten kann.

Wie man anhand der Fig. 1 sieht, verzweigt sich das Tauchrohr 3 in einen ersten Zweig 4 und einen zweiten Zweig 5. Es bildet also zwei getrennt durchströmte Pfade aus. Der erste Zweig endet in dem Prozessgasauslass 6. Dieser Prozessgasauslass 6 durchdringt hier in radialer Richtung das Gehäuse 2 und endet vorzugsweise mit einem Flansch oder Rohranschluss außerhalb des Gehäuses 2. Über diesen Prozessgasauslass 6 wird das bzw. der überwiegende Teil des zumindest von der Mehrheit seiner Partikelfracht befreite Prozessgas wieder der Arbeitsmaschine bzw. Mühle zugeleitet und in diese rezykliert.

Der zweite Zweig 5 des Tauchrohrs 3 endet im Nebenauslass 7, der meist ebenfalls mit einem Flansch abschließt.

Dem Nebenauslass 7 ist ein vorzugsweise vollständig innerhalb des zweiten Zweiges 5 angeordneter Filter 8 strömungsmäßig vorgeschaltet. Der Filter 8 bildet eine dritte Separationszone 16, die vorzugsweise oberhalb der zweiten Separationszone liegt und vorzugsweise, zumindest im Wesentlichen, auf der gleichen Höhe wie die erste Separationszone.

Über den Nebenauslass 7 wird ein kleinerer Teil des Prozessgases abgeführt und schließlich verworfen. Zu diesem Zweck endet der Nebenauslass 7 außerhalb des Tauchrohrs 3 mit einem Flansch oder Rohranschluss. An dieser Stelle kann die später noch näher zu beschreibende, hier nicht figürlich dargestellte, Saugpumpe angeflanscht sein. Sie ist dem Abscheider 1 dienend zugeordnet und stellt daher ggf. einen funktionalen Bestandteil desselben dar.

An seinem oberen Stirnende kann das Tauchrohr 3 mit einer Entstaubungseinrichtung 12 für den Filter 8 abschließen bzw. ausgerüstet sein. Im einfachsten Fall ist die Entstaubungseinrichtung für den Filter 8 ein einfaches, meist elektrisch fernbetätigbares Auf-und-Zu-Ventil. Es kontrolliert einen Pressluftanschluss. Es ermöglicht das Einblasen von Pressluft entgegen der Filterrichtung. In anspruchsvolleren Fällen kommt ein Ventil zum Einsatz, das ein sogenanntes Klopfen ermöglicht, d. h. Beaufschlagung des Filters 8 mit Druckstößen in schneller Abfolge. Alternativ kann auch eine hier nicht figürlich dargestellte mechanische Klopf- oder Vibrationsvorrichtung vorgesehen sein.

Der Ringspalt zwischen der Außenmantelfläche des Filters 8 und der Innenmantelfläche des Tauchrohrs 3 sollte vorzugsweise so gestaltet werden, dass vom Filter 8 zurückgehaltene Partikel, zumindest klumpenweise agglomeriert, nach unten ausfallen können, vorzugweise auf geradem Weg bis in den Produktaustrag 10 hinein - soweit kein mitgerissener Abzug über den ersten Zweig 4 und dessen Prozessgasauslass 6 erfolgt. Vermieden werden muss, dass sich die bereits vom Filter abgeschiedenen Partikel schwebend in dem besagten Ringspalt ansammeln.

Um die internen Druckverluste des Abscheiders zu kompensieren, kann diesem über den Prozessgasauslass ein Injektor, eine Vakuumpumpe oder ein Radialgebläse nachgeschaltet sein (nicht figürlich dargestellt), das dann funktioneller Bestandteil des Abscheiders ist.

Abschließend ist noch anhand der Figur 3 auf die Visualisierung der Gas- und/oder Partikelströme einzugehen.

Der Pfeil P1 symbolisiert das eintretende Prozessgas mit seiner Partikelfracht.

Die Pfeile P2 symbolisieren die Zyklonströmung. Demgegenüber deuten die Pfeile P3 an, wie sich die Strömung in der Beruhigungszone verändert. Aufgrund dessen kommt es zum direkten Ausfall der durch das Zyklonieren abgeschiedenen Partikel, was durch die Pfeile P4 angedeutet wird.

Relativ unauffällig, aber wichtig sind die Pfeile P5, die zeigen, wie die Strömung an der Schikane, die hier durch das Tauchrohr 3 bzw. dessen Tauchrohrendstück 11 realisiert wird, scharf umgelenkt wird, sodass es zu einer weiteren Separation kommt.

Der Pfeil P6 symbolisiert das über den Prozessgasauslass austretende und der Mühle wieder zugeführte Prozessgas. Die Pfeile des Typs P7 symbolisieren den Nebenstrom, der über den zweiten Zweig in Richtung des Filters 8 fließt. Die Pfeile P8 symbolisieren die durch den Filtermantel in das Filterinnere abfließende Strömung, die als Nebenströmung entlang des Pfeils P9 abgeführt und verworfen wird.

Die Pfeile des Typs P10 symbolisieren die gegebenenfalls von der Entstaubungseinrichtung in Gegenrichtung eingeblasene Pressluft, die der Filterreinigung dient. Der Pfeil P11 symbolisiert, wie dadurch vom Filter abgeblasene Partikel in den Produktaustrag 10 abfallen.

### BEZUGSZEICHENLISTE

- 1: Abscheider
- 2: Gehäuse
- 3: Tauchrohr
- 4: erster Zweig
- 5: zweiter Zweig
- 6: Prozessgasauslass
- 7: Nebenauslass
- 8: Filter, genauer gesagt Nebenstromfilter
- 9: Prozessgaseinlass
- 10: Produktaustrag bzw. Partikelaustrag und Revisionsöffnung zur Montage eines Tauchrohrendstücks
- 11: Tauchrohrendstück
- 12: Entstaubungseinrichtung bzw. Spülvorrichtung
- 13: erste Separationszone
- 14: Beruhigungszone
- 15: zweite Separationszone
- 16: dritte Separationszone

- L: Längsachse des Tauchrohrs und meist auch des Gehäuses
- M: Mühle
- MAG: Mahlgutaufgabe (Zufuhr)
- P1: Strömung des eintretendes Prozessgases
- P2: Zyklonströmung
- P3: Strömung in Beruhigungszone
- P4: Ausfall der durch Zyklonieren abgeschiedenen Partikel
- P5: Umlenkung der Strömung an Schikane
- P6: Strömung des austretenden Prozessgases
- P7: Nebenstrom
- P8: durch den Filtermantel ins Filterinnere abfließende Strömung
- P9: Nebenströmung
- P10: von Entstaubungseinrichtung eingeblasene Pressluft
- P11: Abfall der abgeblasenen Partikel in Produktaustrag

## Patentansprüche

1. Abscheider (1) zum Abscheiden von Feststoffpartikeln aus einem mehrfach durch eine Arbeitsmaschine geführten Prozessgasstrom, wobei der Abscheider (1) einen Prozessgaseinlass (9) aufweist, über den von der Arbeitsmaschine abgegebenes, partikelbelastetes Prozessgas in den Abscheider (1) eingespeist wird, und ein filterloses Abscheidungsorgan zur Reduktion der Partikelbelastung des Prozessgases und einen Prozessgasauslass (6) zur Abgabe des reduziert partikelbelasteten Prozessgases an die Arbeitsmaschine, **dadurch gekennzeichnet, dass** der Abscheider (1) einen Nebenstromfilter (8) besitzt, der einen kleineren Teil des Prozessgases filtert, und einen sich daran anschließenden Nebenauslass (7), der den gefilterten Nebenstrom des Prozessgases ausschleust.

2. Abscheider (1) nach Anspruch 1, **dadurch gekennzeichnet, dass** das filterlose Abscheidungsorgan (13, 15) dem Nebenstromfilter (8) derart vorgeschaltet ist, dass der Nebenstromfilter (8) mit reduziert partikelbelastetem Prozessgas gespeist wird.

3. Abscheider (1) nach einem der vorhergehenden Ansprüche, **dadurch gekennzeichnet, dass** das Abscheidungsorgan (13, 15) einen Zyklonabscheider umfasst.

4. Abscheider (1) nach Anspruch 1 oder 2, **dadurch gekennzeichnet, dass** das Abscheidungsorgan (13, 15) eine sich stromabwärts an den Zyklonabscheider anschließende Umlenkschikane umfasst.

5. Abscheider (1) nach Anspruch 4, **dadurch gekennzeichnet, dass** als Umlenkschikane ein Rohr mit einer stirnseitigen Eintrittsöffnung vorgesehen ist, das als Tauchrohr (3) im Bereich des Auges einer Zyklonströmung positioniert ist und die Zyklonströmung bevorzugt durchdringt.

6. Abscheider (1) nach Anspruch 5, **dadurch gekennzeichnet, dass** das Tauchrohr (3) mit einer Eintrittsöffnung an seiner unteren Stirnseite versehen ist und derart ausgebildet ist, dass es in seinem Inneren eine entlang seiner Längsachse (L) aufsteigende Strömung führt, und der Abscheider (1) so ausgebildet ist, dass die Zyklonströmung eine fallende Strömung zwischen dem Prozessgaseinlass (9) und der unteren Stirnseite des Tauchrohrs (3) ausbildet.

7. Abscheider (1) nach Anspruch 5 oder 6, oder nach dem gattungsbildenden Teil des Anspruchs 1 und den kennzeichnenden Teilen der Ansprüche 4, 5 und 6, **dadurch gekennzeichnet, dass** das Tauchrohr (3) dort, wo es die Umlenkschikane bildet, mehrteilig ausgebildet ist, derart, dass seine Eintrittsöffnung von einem vom Rest des Rohres (3) abnehmbaren Tauchrohrendstück (11) gebildet wird, das sich gegen ein anderes Tauchrohrendstück (11) austauschen lässt, das eine Eintrittsöffnung mit einem anderen Durchmesser ausbildet.

8. Abscheider (1) nach einem der vorhergehenden Ansprüche, **dadurch gekennzeichnet, dass** sich das Tauchrohr (3) verzweigt in einen ersten Zweig (4), der einen Prozessgasauslass (6) bildet, und in einen zweiten Zweig (5), der einen Nebenauslass (7) bildet, wobei das Ende des ersten Zweiges (4) vorzugsweise unterhalb des Endes des zweiten Zweiges (5) liegt.

9. Abscheider (1) nach Anspruch 8, **dadurch gekennzeichnet, dass** das Tauchrohr (3) in seinem zweiten Zweig (5) einen dem Nebenauslass (7) vorgeschalteten Nebenstromfilter (8) beherbergt, und der Filter (8) vorzugsweise als Filterrohr mit einer idealerweise vertikal verlaufenden Rohrlängsachse ausgebildet ist, dessen Mantelfläche von außen nach innen vom Nebenstrom durchströmt wird, wobei der Nebenstrom vorzugsweise über einen Spalt zwischen dem Tauchrohr (3) und dem Filterrohr an den Nebenstromfilter (8) herangeführt wird.

10. Abscheider (1) nach einem der vorhergehenden Ansprüche, **dadurch gekennzeichnet, dass** der Abscheider (1) vorzugsweise hinter dem Nebenauslass (7) mit einer Saugpumpe ausgerüstet ist, die den Nebenauslass (7) bzw. den zweiten Zweig (5) mit Unterdruck beaufschlagt.

11. Abscheider (1) nach einem der vorhergehenden Ansprüche, **dadurch gekennzeichnet, dass** der Abscheider (1) eine Entstaubungs- bzw. Spülvorrichtung (12) aufweist, die so gestaltet ist, dass der Filter (8) entgegen seiner Filtrierrichtung gespült werden kann, vorzugsweise mittels Druckstößen.

12. Abscheider (1) nach einem der vorhergehenden Ansprüche, **dadurch gekennzeichnet, dass** das Tauchrohr (3) den Nebenstromfilter (8) für den Nebenauslass (7) beherbergt.

13. Abscheider (1) nach einem der vorhergehenden Ansprüche, **dadurch gekennzeichnet, dass** der dem Nebenauslass (7) vorgeschaltete Nebenstromfilter (8) so angeordnet ist, dass von ihm beim Spülen abgehobene Partikel durch das Tauchrohr (3) hindurch nach unten in den Partikelaustragsbereich (10) abtransportiert werden

14. Abscheider (1) nach einem der vorhergehenden Ansprüche, **dadurch gekennzeichnet, dass** sich das Zyklonmantelrohr oberhalb der Schikane erweitert und auf der Höhe der Schikane wieder verengt.

15. System aus einer Mühle oder einem Brecher und einem damit verrohrten Abscheider zur Entstaubung des in der Mühle oder dem Brecher eingesetzten Prozessgases, **dadurch gekennzeichnet, dass** der Abscheider ein Abscheider nach einem der Ansprüche 1 bis 14 ist.

16. Verfahren zum Abscheiden von Feststoffpartikeln aus einem eine Arbeitsmaschine verlassenden und später dieser im Wesentlichen wieder zuzuführenden Prozessgasstrom, der aus einem Trägergasstrom zum Transport des zu bearbeitenden Gutes besteht, der mit einem Spülgasstrom zum Ausspülen von Partikeln aus Lagern oder anderen sensiblen Bereichen vereinigt ist, **dadurch gekennzeichnet, dass** der Prozessgasstrom zuerst einer filterlosen, vorzugsweise mehrstufigen Partikelabscheidung unterworfen wird und dann der Prozessgasstrom aufgeteilt wird in einen ersten Teil, der der Arbeitsmaschine unfiltriert wieder zugeführt wird, und einen zweiten Teil, der filtriert und dann verworfen wird, wobei der zweite Teil des Prozessgasstroms dem Spülgasstrom entspricht, der der Arbeitsmaschine aktuell neu zugeführt wird.
